# EUROPÄISCHE PATENTSCHRIFT

(11) **EP 0 432 282 B1**
(45) Veröffentlichungstag und Bekanntmachung des Hinweises auf die Patenterteilung: **30.03.1994**
(21) Anmeldenummer: 89122731.6
(22) Anmeldetag: 09.12.1989
(51) Int. Cl.: D04H 1/54, A43B 23/07

(54) **Schuhfutter**
Shoelining
Doublure pour chaussure

(43) Veröffentlichungstag der Anmeldung: 19.06.1991
(73) Patentinhaber: Firma Carl Freudenberg, 69469 Weinheim (DE)
(72) Erfinder: Fehlhaber, Jürgen, Dr., D-6946 Gorxheimertal (DE); Pehr, Ernst, D-6941 Laudenbach (DE); Groitzsch, Dieter, Dr., D-6945 Hirschberg/Leutershausen (DE)

(56) Entgegenhaltungen:
- FR-A- 2 227 370
- GB-A- 2 024 709
- GB-A- 2 199 347

## Beschreibung

Die Erfindung betrifft ein Schuhfutter, welches aus punktverschweißtem Synthesefaser-Vliesstoff und zellulosischen Fasern besteht.

Bekannt sind Schuhfutter aus punktverschweißten Stapelfaservliesstoffen. Diese bestehen aus thermisch erweichbaren Synthesefasern, zum Beispiel aus Polyamid oder Polyester. Solche Schuhfutter finden insbesondere in Sport- und Freizeitschuhen Verwendung.

Insbesondere diese höher beanspruchten Schuhtypen machen eine hohe Abriebfestigkeit des Schuhfutters erforderlich; die thermisch miteinander gut verschweißbaren Synthesefasern sind daher zur Herstellung einer abriebfesten Vliesstoffoberfläche besonders geeignet. Ein erheblicher Nachteil dieses Aufbaus besteht jedoch darin, daß Synthesefaservliesstoffe die Fußfeuchtigkeit als Wasserdampf nicht aufnehmen und speichern oder an das Obermaterial des Schuhs weiterleiten können. Ein weiterer Nachteil solcher Vliesstoffe besteht darin, daß von außen durch das Obermaterial eindringendes Wasser in flüssigem Zustand rasch aufgenommen und durch Kapillarwirkung im gesamten Schuh-Innenraum verteilt wird. In beiden Fällen fühlt sich daher das Schuhfutter nach kurzem Tragen feucht und kalt an.

Zur Verbesserung des Tragekomforts wäre es denkbar, dem Schuhfutter aus Synthesefaser-Vliesstoff einen Anteil zellulosische Fasern beizumischen. Dabei muß jedoch bei einer Zunahme der Ableitfähigkeit für Feuchtigkeit eine drastische Verschlechterung der Abriebfestigkeit in Kauf genommen werden wegen der fehlenden thermischen Verschweißbarkeit eines solchen Vliesstoffs.

Aufgabe der vorliegenden Erfindung war es, bei Erhaltung der fußseitigen Abriebfestigkeit bekannter Schuh-Futtervliesstoffe deren Trockenheit, auch bei längerem Tragen des Schuhs, zu erhöhen.

Es wurde als Lösung der Aufgabe gefunden, daß ein gattungsgemäßes Schuhfutter sowohl abriebfest als auch die Feuchtigkeit vorteilhaft steuernd ausgebildet sein kann, wenn es die Kennzeichen des ersten Patentanspruchs aufweist.

Die thermoplastischen, miteinander punktverschweißten Synthese-Stapelfasern der fußseitigen Vliesstofflage bieten eine abriebfeste Fläche, die auch den Anforderungen höher beanspruchter Sport- und Freizeitschuhe standhält.

Rückseitig ist diese Faserlage mit einer die Fußfeuchtigkeit aufnehmenden Vliesstofflage punktverschweißt, die aus 70 bis 30 Gew.% thermoplastischen Synthesefasern und - in Abmischung hiermit - 30 bis 70 Gew.% zellulosischen Viskose- oder Naturfasern besteht. Diese Faserlage nimmt die vom fußseitigen Synthesefaservliesstoff weitergeleitete Innenfeuchtigkeit als Wasserdampf auf und leitet diesen somit vom Fuß weg zum Obermaterial.

Es liegt somit jederzeit ein Schuhfutter mit einer hoch abriebfesten, fußseitigen Synthesefaserlage vor, die sich auch bei längerem Tragen trocken anfühlt.

Überraschenderweise ergeben sich zwei weitere Vorteile aus dem erfindungsgemäßen Aufbaus des Schuhfutters: Zum einen fühlt sich das mehrlagige Vliesstoff-Futter wesentlich weicher, d.h. textilähnlicher, an als ein solches aus reinen Synthesefasern.

Zum anderen hat sich unerwartet gezeigt, daß von außen, durch das Obermaterial, eingedrungenes Wasser sich nur etwa halb so schnell in den Schuh-Innenraum hinein ausbreitet, als dies bei Synthesefaser-Futtern der Fall ist.

Offenbar führt ein durch Feuchtigkeit in flüssiger Form eingeleitetes Quellen der zellulosischen Fasern zu einer Speicherwirkung, welche die eigentlich zu erwartende kapillare Weiterleitung des Wassers in die fußseitige Viskosefaser-Lage behindert.

Eine Verringerung des Gewichtsanteils an zellulosischen Fasern unter 30 % führt zu einem Verlust der Feuchteleitfähigkeit und Weichheit; die Lage zeigt dann ein Verhalten bei Feuchtigkeit wie eine reine Synthesefaser-Schicht. Sind mehr als 70 Gew.% zellulosische Fasern enthalten, ist mangels thermischer Verschweißbarkeit dieser Fasern sowohl deren fester Zusammenhalt innerhalb der betreffenden Lage als auch deren Verbindung mit den Synthesefasern der benachbarten Lage oder Lagen durch Punktverschweißen nicht mehr gewährleistet.

Bei der Auswahl der zellulosischen Fasern wird man zu den allfällig verfügbaren Viskosefasern, also Fasern aus natürlichen Polymeren pflanzlicher Herkunft, greifen.

Die dabei verwendbaren Stapellängen sind nicht kritisch.

Baumwollfasern sind gleichermaßen für die vorliegende Erfindung einsetzbar, wenn reine Naturfasern verwendet werden sollen. Jedoch ist das Gemisch aus Baumwoll- und thermoplastischen Fasern aufgrund des gedrehten, flachen Querschnitts ersterer etwas weniger gut verschweißbar, weswegen dann der Anteil an verschweißbaren Synthesefasern im Rahmen der Erfindung erhöht werden müßte.

Als besonders bevorzugte Ausgestaltung eines Schuhfutters gemäß der Erfindung ergab sich ein dreilagiger Aufbau, wobei die zellulosische Fasern enthaltende Lage beidseitig mit je einer Synthesefaserlage thermisch punktverschweißt ist. Der Vorteil dieser Variante liegt darin, daß das Verarbeiten auch von ungeschultem Personal vorgenommen werden kann, da ein Vertauschen der Seiten nicht von Bedeutung ist.

Die Auswahl der Synthesefasern ist nicht kritisch für die Lösung der vorliegenden Erfindung. Es ist nur wesentlich, daß alle eingesetzten Synthesefasern leicht punktverschweißbar, d.h. bei Einwirkung von Druck und Hitze gut klebefähig, sind.

Geeignete Fasern bestehen daher aus einem oder mehreren Werkstoffen wie Polypropylen, Polyethylen, Polyester oder Polyamid als Ein- oder Mehrkomponentenfaser.

### Beispiele:

1. Ein Faserflor von 75 g/m², bestehend aus Polyamid 6-Fasern mit einem Titer von 1,7 dtex, wird mit einer rückwärtigen zweiten Auflage von 75 g/m² belegt, welche besteht aus 40 Gew.% Polyamid 6-Fasern mit einem Titer von 1,7 dtex und 60 Gew.% Viskosefasern mit gleichem Titer. Dieser zweilagige Flor wird zwischen einer glatten Walze und einer beheizten Punktprägewalze bei einer Verschweißfläche von 21 % punktverschweißt. Die auf die Fasern einwirkende Temperatur beträgt 212 °C. Der resultierende Vliesstoff besitzt eine Dicke von 0,4 mm.
2. Ein Faserflor von 50 g/m², bestehend aus Kern-/Mantel-Fasern mit einem Polyamid 66- und einem Polyamid 6- Anteil, wobei die Fasern einen Titer von 3,3 dtex aufweisen, wird mit einer Florlage von 50 g/m² belegt, welche aus einem Gemisch von 60 Gew.% Viskose- und 40 Gew.% Bikomponentenfasern gemäß dem ersten Faserflor besteht. Die Viskosefasern haben einen Titer von 1,7 dtex. Auf diese beiden Lagen wird eine dritte Florlage von 50 g/m² aufgebracht, welche die gleichen Merkmale wie die erste Bikomponentenfaserlage aufweist. Dieser dreischichtige Flor wird wie in Beispiel 1 mit einer beheizten Walze bei einer Verschweißfläche von 17 % verfestigt; die Verfestigungs-Vorrichtung und die einwirkende Temperatur entsprechen Beispiel 1. Der resultierende, punktverfestigte Faservliesstoff besitzt eine Dicke von 0,6 mm.

Die Produkte aus Beispiel 1 und 2 zeichnen sich durch eine gute Wasserdampf-Aufnahme und Wiederabgabe aus. Beide Werte liegen um etwa 30 % über denen der reinen Synthesefaser-Vliesstoffe,
Mit zwei Tests an einem reinen Synthesefaservliesstoff und an einem erfindungsgemäßen Produkt gemäß Beispiel 2 wurde das Netzverhalten gemessen.
Die resultierenden Werte sind ein Maß für die Weiterleitfähigkeit flüssigen Wassers.

| Netzverhalten von Schuhfuttern (150 g/m²) | | | | |
|---|---|---|---|---|
| Zusammensetzung | Wassersteighöhe (mm) nach DIN 53 924 nach | | Re-Wicking-Test (s) Wassersteighöhe * | |
| | 1 min | 10 min | 25 mm | 50 mm |
| Fasern aus Polyamid 6 | 43 | 85 | 20 | 100 |
| Beispiel 2 | 33 | 76 | 45 | 210 |

| | | | | |
|---|---|---|---|---|
| *) Re-Wicking-Test: Zeit in Sekunden, bis bei einem senkrecht in Wasser eingetauchten Probestreifen dieses eine bestimmte Steighöhe erreicht hat. | | | | |

Es zeigt sich klar, daß das erfindungsgemäße Schuhfutter ein um etwa 50 % herabgesetztes Wasserleitvermögen aufweist, verglichen mit einem Produkt aus reinen Synthesefasern.

## Patentansprüche

1. Schuhfutter aus thermisch punktverschweißtem Stapelfaservliesstoff, enthaltend Synthese- und zellulosische Fasern, gekennzeichnet durch einen zwei- bis dreilagigen Aufbau, wobei die dem Fuß zugekehrte Lage aus thermoplastischen Synthese-Stapelfasern besteht und rückseitig mit einer weiteren Vliesstofflage verbunden ist, die 30 bis 70 Gew.% zellulosische Fasern und 70 bis 30 Gew.% thermoplastische Synthesefasern enthält.

2. Schuhfutter nach Anspruch 1, dadurch gekennzeichnet, daß die zellulosischen Fasern Viskosefasern sind.

3. Schuhfutter nach Anspruch 1, dadurch gekennzeichnet, daß die zellulosischen Fasern Baumwollfasern sind.

4. Schuhfutter nach Anspruch 1 bis 3, dadurch gekennzeichnet, daß die zellulosische Fasern enthaltende Lage beidseitig mit je einer Synthesefaserlage punktverschweißt ist.

5. Schuhfutter nach Anspruch 1 bis 4, dadurch gekennzeichnet, daß die Synthesefasern Ein- oder Mehrkomponentenfasern aus Polypropylen, Polyethylen, Polyester oder Polyamid darstellen.

## Claims

1. A shoelining composed of a thermally spot-welded staple fibre nonwoven containing synthetic and cellulosic fibres, characterized by a two- or three-layered structure, the layer facing the foot being composed of thermoplastic synthetic staple fibres and being bonded on the back to a further nonwoven layer containing from 30 to 70% by weight of cellulose fibres and from 70 to 30% by weight of thermoplastic synthetic fibres.

2. A shoelining according to claim 1, characterized in that the cellulosic fibres are viscose fibres.

3. A shoelining according to claim 1, characterized in that the cellulosic fibres are cotton fibres.

4. A shoelining according to any of claims 1 to 3, characterized in that the layer which contains cellulosic fibres is spot-welded on both sides to a synthetic fibre layer in each case.

5. A shoelining according to any of claims 1 to 4, characterized in that the synthetic fibres are one- or multi-component fibres of polypropylene, polyethylene, polyester or polyamide.

## Revendications

1. Doublure de chaussure, formée d'une nappe de fibres synthétiques soudée thermiquement par points, contenant des fibres synthétiques et cellulosiques, caractérisée par une structure à deux à trois couches, la couche dirigée vers le pied se composant de fibres thermoplastiques de synthèse à filer et étant reliée du côté arrière à une autre couche de matière en nappe, qui contient de 30 à 70% en poids de fibres cellulosiques et de 70 à 30% en poids de fibres thermoplastiques de synthèse.

2. Doublure de chaussure selon la revendication 1, caractérisée en ce que les fibres cellulosiques sont des fibres de viscose.

3. Doublure de chaussure selon la revendication 1, caractérisée en ce que les fibres cellulosiques sont des fibres de coton.

4. Doublure de chaussure selon les revendications 1 à 3, caractérisée en ce que la couche contenant les fibres cellulosiques est liée par soudage par points sur ses deux côtés à une couche de libres de synthèse correspondantes.

5. Doublure de chaussure selon les revendications 1 à 4, caractérisée en ce que les libres de synthèse sont des fibres à un ou plusieurs composants en polypropylène, polyéthylène, polyester ou polyamide.
